# FASCICULE DE BREVET EUROPEEN

(11) **EP 2 126 527 B1**
(45) Date de publication et mention de la délivrance du brevet: **18.09.2013**
(21) Numéro de dépôt: 08762169.4
(22) Date de dépôt: 27.02.2008
(51) Int. Cl.: G01J 3/02, G01J 3/04, G01J 3/28

(54) **SPECTROGRAPHE A FENTE INCLINEE**
SPEKTROGRAPH MIT GENEIGTEM SCHLITZ
INCLINED-SLIT SPECTROGRAPH

(30) Priorité: 28.02.2007 FR 0753565
(43) Date de publication de la demande: 02.12.2009
(73) Titulaire: Horiba Jobin Yvon S.A.S., 91160 Longjumeau (FR)
(72) Inventeur: THEVENON, Alain, F-91220 Bretigny-sur-Orge (FR); MILLET, Viviane, F-91310 Linas (FR); CORDE, Pierre-André, F-94130 Nogent-sur-Marne (FR)
(74) Mandataire: Michelet, Alain
(86) Numéro de dépôt international: PCT/FR2008/050334
(87) Numéro de publication internationale: WO 2008/119906

(56) Documents cités:
- DE-A1- 19 611 218
- US-A- 4 633 078
- US-A- 5 719 672

## Description

La présente invention concerne un spectrographe à fente inclinée.

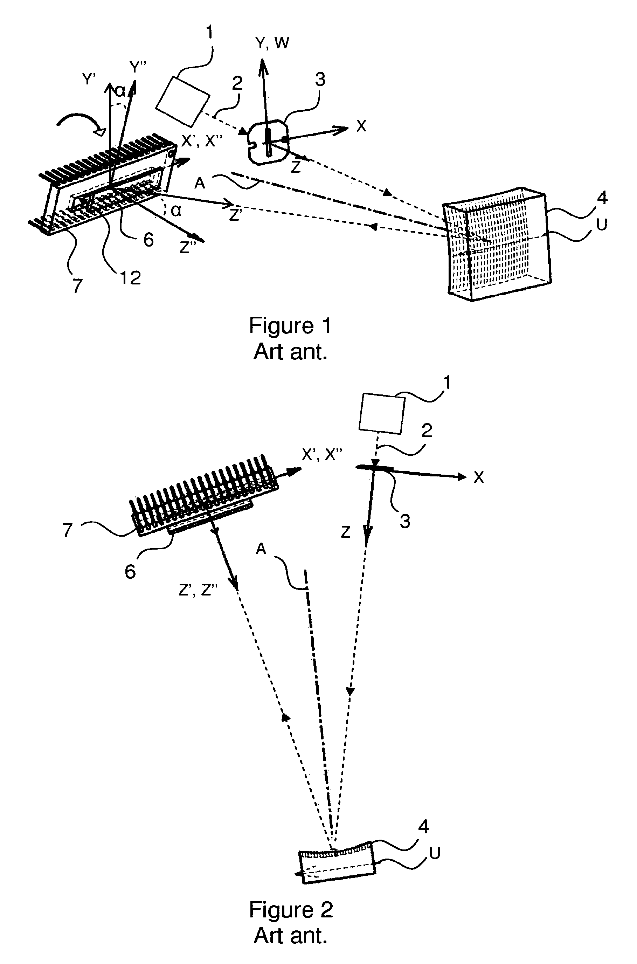

Les spectrographes à réseau de l'art antérieur comprennent une source lumineuse, une fente d'entrée, un réseau qui peut être un réseau holographique concave et un détecteur. Les figures 1 et 2 représentent un exemple de spectrographe à réseau selon l'art antérieur. La figure 1 est une représentation du spectrographe à trois dimensions et la figure 2 correspond à une vue de dessus.

Les réseaux holographiques concaves présentent une surface optique sur laquelle a été inscrit un grand nombre de traits (jusqu'à 6000 traits/mm) servant à diffracter tout faisceau de rayons incidents. Ils fonctionnent préférentiellement en réflexion.

Les réseaux holographiques concaves sont habituellement corrigés des aberrations.

Le détecteur peut être un détecteur de type PDA (Photodiode array) ou de type CCD (Charge Coupled Device). Le matériau utilisé pour le détecteur peut être en silicium ou InGaAs par exemple avec une surface qui est très réfléchissante.

Il est possible d'utiliser un détecteur refroidi. Un tel détecteur refroidi comporte une fenêtre qui protège la surface sensible du détecteur. Cette fenêtre est indispensable afin d'éviter des phénomènes de condensation sur la surface du détecteur.

Les réflexions multiples produites dans la fenêtre et entre les faces de la fenêtre et la surface du détecteur dégradent considérablement le rapport signal sur bruit, superposant au spectre à mesurer des spectres parasites.

Afin de réduire l'influence de ces phénomènes sur la performance du spectrographe, il est connu d'utiliser un réseau calculé de telle sorte que le spectre qu'il produit soit incliné. Ainsi, les faisceaux parasites réfléchis sur la surface sensible du détecteur ne retournent pas vers le réseau. On évite ainsi des phénomènes de rediffraction à l'origine de problèmes de lumière parasite qui nuisent à la performance de l'instrument.

On connaît également la méthode qui consiste à incliner le détecteur autour d'un axe parallèle au spectre, comme illustré sur les figures 1 et 2, pour que les réflexions multiples entre le détecteur et les faces de la fenêtre aillent partiellement ou totalement à l'extérieur de la surface sensible du détecteur dans le sens perpendiculaire à la dispersion. En général, cette action altère la résolution spectrale de l'instrument.

Les deux méthodes précédentes, mettant chacune en oeuvre un moyen d'inclinaison, peuvent être utilisées séparément ou conjointement.

Elles améliorent le bruit de fond du spectrographe. En revanche, elles dégradent considérablement la résolution spectrale de l'appareil.

Il est aussi connu d'utiliser un filtre sélecteur d'ordre incliné devant le détecteur afin d'éviter une nouvelle contribution à des spectres parasites.

Des exemples de l'état de la technique sont décrits dans US5719672, DE 196 11 218, US 4633078, WO 2005095910 et DE 3403372.

L'objectif de la présente invention est donc de proposer une solution pour compenser les pertes de résolution spectrale du spectrographe.

A cet effet, l'invention concerne un spectrographe à fente inclinée comprenant les caractéristiques de la revendication 1.

Dans différents modes de réalisation possibles, la présente invention concerne également les caractéristiques qui ressortiront au cours de la description qui va suivre et qui devront être considérées isolément ou selon toutes leurs combinaisons techniquement possibles :
- le spectrographe à fente inclinée comprend un filtre sélecteur disposé entre le réseau et le détecteur,
- le moyen d'inclinaison apte à éviter des spectres parasites comprend le détecteur qui est un détecteur incliné, ledit détecteur incliné étant incliné d'un angle (α) de façon à ce que le plan de détection (X", Y") dudit détecteur soit incliné d'un angle (α) par rapport au plan image (X', Y') du réseau, et ledit angle (α) étant défini dans le plan (Y", Z"), orthogonal au plan de détection (X", Y"),
- l'angle (α) du détecteur incliné est supérieur à 0° et inférieur à 45°,
- le moyen d'inclinaison apte à éviter des spectres parasites comprend le réseau qui est un réseau calculé de telle sorte que le spectre qu'il produit soit incliné d'un angle (β) par rapport au plan de détection (X", Y") du détecteur,
- le moyen d'inclinaison apte à éviter des spectres parasites comprend :
   - le détecteur qui est un détecteur incliné, ledit détecteur incliné étant incliné d'un angle (α) de façon à ce que le plan de détection (X", Y") dudit détecteur soit incliné d'un angle (α) par rapport au plan image (X', Y') du réseau, et ledit angle (α) étant défini dans le plan (Y", Z"), orthogonal au plan de détection (X", Y"), et
   - le réseau qui est un réseau calculé de telle sorte que le spectre qu'il produit soit incliné d'un angle (β) par rapport au plan de détection (X", Y") du détecteur.

L'invention sera décrite plus en détail en référence aux dessins annexés dans lesquels:
- les figures 1 et 2 sont des représentations à trois dimensions et une vue de dessus respectivement, d'un spectrographe à réseau holographique concave comprenant un détecteur incliné d'un angle (α) selon l'art antérieur ;
- les figures 3 et 4 sont des représentations à trois dimensions et une vue de dessus respectivement, d'un spectrographe à fente inclinée, selon un mode de réalisation de l'invention ;
- la figure 5 montre deux spectres dont un mesuré avec un détecteur non incliné et un autre mesuré avec un détecteur incliné associé à une fente inclinée.

La figure 1 est une représentation à trois dimensions d'un spectrographe à réseau holographique concave selon l'art antérieur. La figure 2 représente la vue de dessus correspondante.

Un tel spectrographe comprend une source lumineuse 1 qui émet un faisceau lumineux se dirigeant vers une fente d'entrée 3 selon une direction 2, parallèle à un axe Z. La fente d'entrée 3 est définie selon le repère (X, Y, Z). La fente d'entrée 3 se trouve dans le plan (X, Y).

On entend par fente d'entrée 3, une ouverture dans un support ou tout autre moyen bloquant une partie du faisceau lumineux émis par la source lumineuse 1 et transmettant l'autre partie de ce faisceau.

La source lumineuse 1 illumine quasi uniformément la fente d'entrée 3 directement ou à l'aide d'une optique de couplage.

Il ressort de la fente d'entrée 3, un faisceau lumineux transmis.

Le faisceau lumineux transmis par la fente d'entrée 3 est incident sur un réseau 4 qui peut être un réseau holographique concave ou autre. On obtient un faisceau lumineux diffracté et un spectre dans un plan image (X', Y'). Le plan image est défini selon le repère (X', Y', Z') où l'axe Z' est orthogonal au plan image (X', Y').

La fente d'entrée 3 est rectangulaire et s'étend longitudinalement selon un axe longitudinal Y. Le réseau 4 est un réseau holographique concave. Les traits de ce réseau holographique concave 4 sont courbés et disposés les uns à la suite des autres selon un axe U. La normale W à cet axe d'alignement U et à l'axe Z est parallèle à l'axe longitudinal Y de la fente d'entrée 3. Autrement dit, la normale W est perpendiculaire au plan (U, Z). Le réseau holographique concave 4 présente un axe A normal à l'axe U et passant par le sommet de la surface courbée du réseau.

Un filtre sélecteur d'ordre peut éventuellement être inséré dans le faisceau après le réseau 4.

Le faisceau lumineux diffracté par le réseau 4 est détecté par un détecteur 7 qui peut être multicanal. Le détecteur 7 est disposé sur le trajet du faisceau lumineux diffracté par le réseau 4 afin d'intercepter le spectre contenu dans le plan image (X', Y').

Le détecteur 7 est défini selon un repère (X", Y", Z"). Le plan (X", Y") représente le plan de détection qui est orthogonal à l'axe Z".

Le détecteur 7 comprend une surface sensible (non représentée) qui se trouve dans le plan de détection (X", Y") du détecteur 7.

Afin de simplifier le schéma, seule la façade du détecteur 7 est représentée sur les figures 1 et 2, et celles qui vont suivre. Cette façade comprend une ouverture de détecteur 12 traversée par le faisceau lumineux diffracté avant qu'il n'arrive sur la surface sensible du détecteur 7.

Le spectrographe à réseau holographique concave peut comprendre des moyens optiques tels des miroirs pour réfléchir et focaliser le faisceau lumineux transmis par la fente 3, le faisceau diffracté et éventuellement le faisceau dispersé.

Le détecteur 7 comprend souvent une fenêtre 6 à travers laquelle est transmis le faisceau lumineux diffracté par le réseau 4.

Une partie du faisceau lumineux diffracté génère des réflexions multiples sur la fenêtre 6 ou entre celle-ci et la surface sensible du détecteur 7.

Pour éliminer ces réflexions, il est connu, comme dit plus haut, d'utiliser au moins un moyen d'inclinaison apte à éviter que des spectres parasites se superposent au spectre à mesurer.

Ces moyens d'inclinaison de l'art antérieur consistent à incliner soit le spectre à mesurer, c'est-à-dire le plan image (X', Y') du réseau 8, par rapport au plan de détection (X", Y") du détecteur 7, soit le plan de détection (X", Y") du détecteur 7.

Le moyen d'inclinaison peut comprendre un détecteur incliné 7, comme représenté sur les figures 1 et 2.

Le détecteur incliné 7 est incliné de façon à ce que le plan de détection (X", Y") de ce dernier soit incliné d'un angle (α) par rapport au plan image (X', Y') du réseau. L'angle (α) est défini dans le plan (Y", Z"), orthogonal au plan de détection (X", Y").

On entend par l'inclinaison du détecteur, l'inclinaison de la surface sensible du détecteur également.

Sur la figure 1 , l'axe Z" est incliné d'un angle (α) par rapport à l'axe Z' et l'axe Y" est incliné d'un angle (α) par rapport à l'axe Y'.

Cette inclinaison d'un angle (α) évite que les faisceaux réfléchis reviennent vers le réseau 4.

De même, il est possible d'utiliser, comme moyen d'inclinaison, un réseau calculé 8 de telle sorte que le spectre qu'il produit soit incliné d'un angle (β) par rapport au plan de détection (X", Y") du détecteur 7. Le spectre produit est contenu dans le plan image (X', Y') du réseau calculé 8.

Ces deux moyens d'inclinaison peuvent être utilisés séparément ou conjointement.

Ils améliorent le bruit de fond du spectrographe. En revanche, ils dégradent considérablement la résolution spectrale de l'appareil.

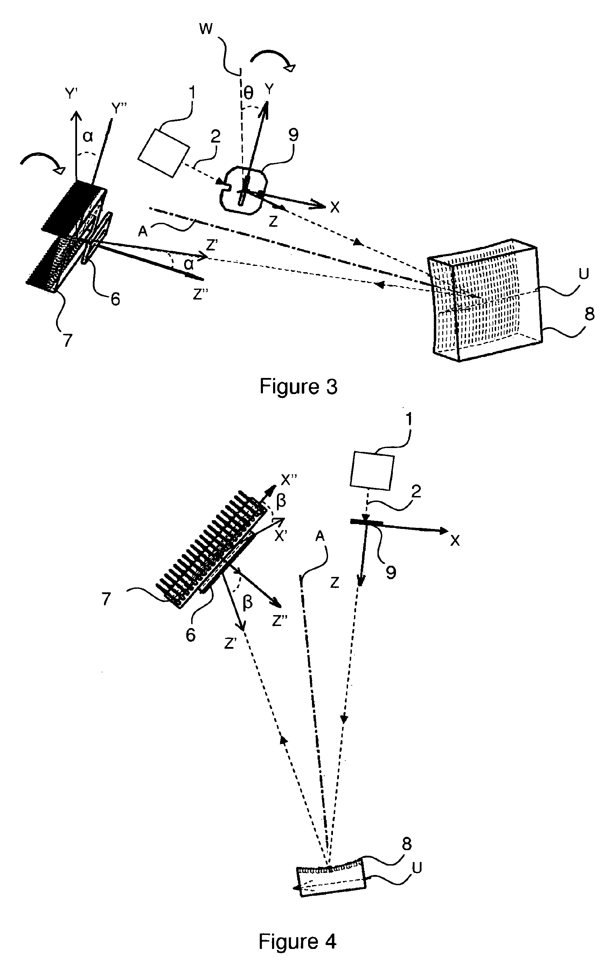

Pour résoudre ce problème, l'invention propose, comme représenté sur les figures 3 et 4, un spectrographe à fente inclinée comprenant un moyen de compensation apte à compenser les pertes de résolution spectrale générées par les moyens d'inclinaison.

Dans cet exemple, les deux moyens d'inclinaison sont utilisés conjointement.

Les figures 3 et 4 correspondent à une représentation à trois dimensions et à une vue de dessus, respectivement, d'un spectrographe à fente inclinée.

Pour faciliter la compréhension de la figure 3, seul l'angle (α) est représenté.

La figure 4 montre seulement l'angle (β) car l'angle (α) n'est pas visible dans le plan de la feuille.

Le moyen de compensation des pertes de résolution spectrale comprend une fente d'entrée inclinée 9 disposée entre la source lumineuse 1 et le réseau calculé 8.

La fente d'entrée inclinée 9 est inclinée dans le plan (X, Y) perpendiculaire à la direction 2 du faisceau lumineux émis par la source lumineuse 1. La fente d'entrée inclinée 9 subie une rotation autour de l'axe Z.

La fente d'entrée inclinée 9 est en fait inclinée par rapport aux traits du réseau 4 qui sont alignés suivant un axe d'alignement U.

Plus précisément, l'axe longitudinal Y de la fente d'entrée inclinée 9 est incliné d'un angle (θ) par rapport à la normale W au plan (U, Z).

Dit autrement, la fente d'entrée inclinée 9 est inclinée d'un angle (θ) par rapport à sa position initiale, représentée sur la figure 1 , où elle n'est pas inclinée. L'angle (θ) est supérieur à 0° et inférieur à 90°.

Encore dit autrement, si on projette les traits du réseau sur un plan de projection parallèle à l'axe d'alignement U, les traits projetés sont alignés également selon l'axe d'alignement U et l'axe longitudinal Y de la fente d'entrée inclinée 9 est incliné de l'angle (θ) par rapport aux traits projetés dans le plan de projection.

Le détecteur incliné 7 est incliné d'un angle (α) de façon à ce que le plan de détection (X", Y") du détecteur 7 soit incliné d'un angle (α) par rapport au plan image (X', Y') du réseau. Sur la figure 3, le détecteur 7 est incliné vers le bas. Il peut également être incliné vers le haut.

L'angle (α) du détecteur incliné (7) est supérieur à 0° et inférieur à 45°.

La fente d'entrée inclinée 9 permet de compenser les pertes de résolution introduites par le détecteur incliné d'un angle (α) 7 et le spectre incliné d'un angle (β).

Dans d'autres modes de réalisation possibles, la fente d'entrée inclinée 9 peut être utilisée lorsque les moyens d'inclinaison, précédemment cités, sont utilisés séparément.

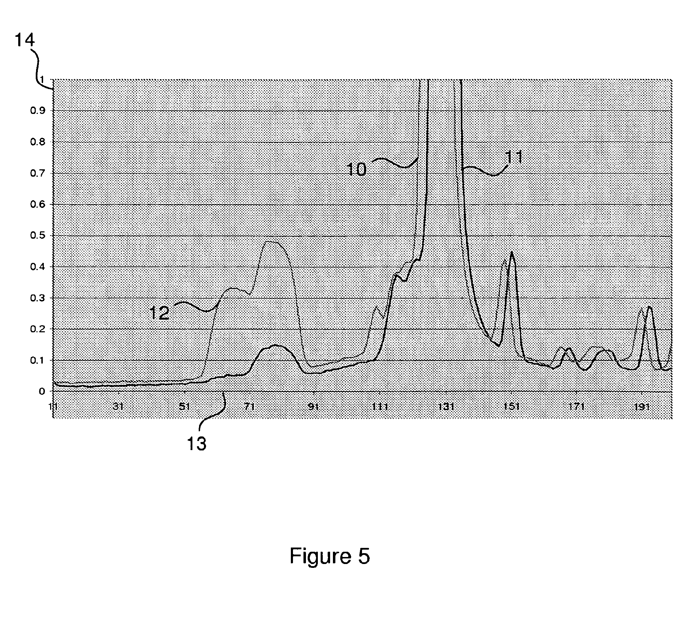

La figure 5 montre deux spectres 10, 11. L'axe des abscisses 13 représente des pixels qui correspondent en fait à des longueurs d'onde et l'axe des ordonnées 14 représente l'intensité du signal en pourcentage.

La courbe 10 correspond au spectre mesuré un détecteur 7 non incliné.

Il apparaît sur le spectre 10 un pic parasite 12 provenant des réflexions du faisceau à mesurer entre la fenêtre du détecteur et la surface de détection du détecteur.

La courbe 11 correspond à un spectre mesuré par un détecteur incliné 7 d'un angle (α) de 20° associé à une fente inclinée d'un angle (θ) de 5°. Le pic parasite 12 a quasiment disparu sans perdre en résolution spectrale ou peu.

Les résultats ci-dessous sont donnés pour une longueur d'onde de 800 nm.

La bande passante du faisceau mesuré, lorsque le détecteur 7 n'est pas incliné, est de 1,58 nm. Elle est de 3,98 nm lorsque le détecteur 7 est incliné et lorsque la fente 3 n'est pas inclinée. La bande passante est de 1,68 nm lorsque le détecteur 7 et la fente 9 sont inclinés.

Ainsi, l'invention permet de compenser les pertes de résolution spectrale d'un spectrographe à fente inclinée de manière simple et à faible coût.

## Revendications

1. Spectrographe à fente inclinée comprenant :
- une source lumineuse (1) apte à émettre un faisceau lumineux suivant une direction (2) parallèle à un axe (Z),
- une fente d'entrée (3, 9) apte à transmettre une partie du faisceau lumineux émis par la source lumineuse (1) et à générer un faisceau lumineux transmis, ladite fente d'entrée étant de forme rectangulaire et s'étendant selon un axe longitudinal (Y),
- un réseau (4, 8) comprenant des traits disposés les uns à la suite des autres suivant un axe d'alignement (U) et perpendiculaires au plan (U, Z) du spectrographe, ledit réseau (4, 8) étant apte à diffracter le faisceau lumineux transmis par la fente d'entrée (3, 9) et à générer un faisceau lumineux diffracté et un spectre dans un plan image (X', Y'),
- un détecteur (7) apte à détecter le faisceau lumineux diffracté par le réseau (4, 8), ledit détecteur (7) comprenant une fenêtre (6) à travers laquelle est transmis le faisceau lumineux diffracté par le réseau (4, 8), une partie du faisceau lumineux diffracté générant des réflexions sur la fenêtre (6) ou entre celle-ci et la surface sensible du détecteur (7) contenue dans un plan de détection (X", Y"),
- au moins un moyen d'inclinaison relative du plan image (X',Y') du spectre diffracté par rapport au plan de détection (X", Y") du détecteur apte à éviter des spectres parasites,
**caractérisé en ce qu'**il comprend :
- un moyen de compensation apte à compenser les pertes de résolution spectrale générées par les moyens d'inclinaison, ledit moyen de compensation comprenant la fente d'entrée (3, 9) qui est une fente d'entrée inclinée (9) disposée entre la source lumineuse (1) et le réseau (4, 8) et un moyen de rotation de la fente d'entrée par rapport à un axe perpendiculaire au plan de la fente, ladite fente d'entrée inclinée (9) étant inclinée autour de l'axe (Z) dans un plan (X, Y) perpendiculaire à la direction (2) du faisceau lumineux émis par la source lumineuse (1), l'axe longitudinal (Y) de la fente d'entrée inclinée (9) étant incliné d'un angle (θ) par rapport à la normale (W) au plan (U, Z) de dispersion du réseau , l'angle (θ) étant supérieur à 0 ° et inférieur à 90°.

2. Spectrographe à fente inclinée selon la revendication 1, **caractérisé en ce qu'**il comprend un filtre sélecteur disposé entre le réseau (4, 8) et le détecteur (7).

3. Spectrographe à fente inclinée selon l'une quelconque des revendications 1 ou 2, **caractérisé en ce que** le moyen d'inclinaison apte à éviter des spectres parasites comprend le détecteur (7) qui est un détecteur incliné, ledit détecteur incliné étant incliné d'un angle (α) de façon à ce que le plan de détection (X", Y") dudit détecteur soit incliné d'un angle (α) par rapport au plan image (X', Y') du réseau, et ledit angle (α) étant défini dans le plan (Y", Z"), orthogonal au plan de détection (X", Y").

4. Spectrographe à fente inclinée selon la revendication 3, **caractérisé en ce que** l'angle (α) du détecteur incliné (7) est supérieur à 0° et inférieur à 45°.

5. Spectrographe à fente inclinée selon l'une quelconque des revendications 1 à 4, **caractérisé en ce que** le moyen d'inclinaison apte à éviter des spectres parasites comprend le réseau (4, 8) qui est un réseau calculé (8) de telle sorte que le spectre qu'il produit soit incliné d'un angle (β) par rapport au plan de détection (X", Y") du détecteur (7).

6. Spectrographe à fente inclinée selon la revendication 1, **caractérisé en ce que** le moyen d'inclinaison apte à éviter des spectres parasites comprend : - le détecteur (7) qui est un détecteur incliné, ledit détecteur incliné étant incliné d'un angle (α) de façon à ce que le plan de détection (X", Y") dudit détecteur soit incliné d'un angle (α) par rapport au plan image (X', Y') du réseau, et ledit angle (α) étant défini dans le plan (Y", Z"), orthogonal au plan de détection (X", Y"), et - le réseau (4, 8) qui est un réseau calculé (8) de telle sorte que le spectre qu'il produit soit incliné d'un angle (β) par rapport au plan de détection (X", Y") du détecteur (7).

## Patentansprüche

1. Spektrograph mit geneigtem Schlitz, der Folgendes umfasst:
- eine Lichtquelle (1), die geeignet ist, ein Lichtbündel entlang einer Richtung (2) parallel zu einer Achse (Z) auszustrahlen,
- einen Eingangsschlitz (3, 9), der geeignet ist, einen Teil des durch die Lichtquelle (1) ausgestrahlten Lichtbündels durchzulassen und ein durchgelassenes Lichtbündel zu erzeugen, wobei der Eingangsschlitz eine rechteckige Form aufweist und sich entlang einer Längsachse (Y) erstreckt,
- ein Gitter (4, 8), das Linien umfasst, die nacheinander entlang einer Ausrichtungsachse (U) und senkrecht zur Ebene (U, Z) des Spektrographen angeordnet sind, wobei das Gitter (4, 8) geeignet ist, das durch den Eingangsschlitz (3, 9) durchgelassene Lichtbündel zu beugen und ein gebeugtes Lichtbündel und ein Spektrum in einer Bildebene (X', Y') zu erzeugen,
- einen Detektor (7), der geeignet ist, um das durch das Gitter (4, 8) gebeugte Lichtbündel zu detektieren, wobei der Detektor (7) ein Fenster (6) umfasst, durch das das durch das Gitter (4, 8) gebeugte Lichtbündel durchgelassen wird, wobei ein Teil des gebeugten Lichtbündels auf dem Fenster (6) oder zwischen ihm und der lichtempfindlichen Fläche des Detektors (7), die in einer Detektionsebene (X", Y") enthalten ist, Reflexionen erzeugt,
- mindestens ein Mittel zur relativen Neigung der Bildebene (X', Y') des gebeugten Spektrums in Bezug zur Detektionsebene (X", Y") des Detektors, das dazu geeignet ist, Störspektren zu vermeiden,
**dadurch gekennzeichnet, dass** er Folgendes umfasst:
- ein Kompensationsmittel, das geeignet ist, die Verluste an spektraler Auflösung, die durch die Neigungsmittel erzeugt werden, zu kompensieren, wobei das Kompensationsmittel den Eingangsschlitz (3, 9), der ein geneigter Eingangsschlitz (9) ist, der zwischen der Lichtquelle (1) und dem Gitter (4, 8) angeordnet ist, und ein Mittel zur Drehung des Eingangsschlitzes in Bezug zu einer Achse umfasst, die senkrecht zur Ebene des Schlitzes ist, wobei der geneigte Eingangsschlitz (9) um die Achse (Z) in einer Ebene (X, Y) geneigt ist, die senkrecht zur Richtung (2) des durch die Lichtquelle (1) ausgestrahlten Lichtbündels ist, wobei die Längsachse (Y) des geneigten Eingangsschlitzes (9) um einen Winkel (θ) in Bezug zur Normalen (W) zur Streuungsebene (U, Z) des Gitters geneigt ist, wobei der Winkel (θ) größer als 0° und kleiner als 90° ist.

2. Spektrograph mit geneigtem Schlitz nach Anspruch 1, **dadurch gekennzeichnet, dass** er einen Auswahlfilter umfasst, der zwischen dem Gitter (4, 8) und dem Detektor (7) angeordnet ist.

3. Spektrograph mit geneigtem Schlitz nach einem der Ansprüche 1 oder 2, **dadurch gekennzeichnet, dass** das Neigungsmittel, das geeignet ist, Störspektren zu vermeiden, den Detektor (7) umfasst, der ein geneigter Detektor ist, wobei der geneigte Detektor um einen Winkel (α) geneigt ist, derart, dass die Detektionsebene (X", Y") des Detektors um einen Winkel (α) in Bezug zur Bildebene (X', Y') des Gitters geneigt ist und der Winkel (α) in der Ebene (Y", Z") definiert ist, die orthogonal zur Detektionsebene (X", Y") ist.

4. Spektrograph mit geneigtem Schlitz nach Anspruch 3, **dadurch gekennzeichnet, dass** der Winkel (α) des geneigten Detektors (7) größer als 0° und kleiner als 45° ist.

5. Spektrograph mit geneigtem Schlitz nach einem der Ansprüche 1 bis 4, **dadurch gekennzeichnet, dass** das Neigungsmittel, das geeignet ist, um Störspektren zu vermeiden, das Gitter (4, 8) umfasst, das ein Gitter (8) ist, das derart berechnet ist, dass das Spektrum, das es erzeugt, um einen Winkel (β) in Bezug zur Detektionsebene (X", Y") des Detektors (7) geneigt ist.

6. Spektrograph mit geneigtem Schlitz nach Anspruch 1, **dadurch gekennzeichnet, dass** das Neigungsmittel, das geeignet ist, um Störspektren zu vermeiden, Folgendes umfasst: Den Detektor (7), der ein geneigter Detektor ist, wobei der geneigte Detektor derart um einen Winkel (α) geneigt ist, dass die Detektionsebene (X", Y") des Detektors um einen Winkel (α) in Bezug zur Bildebene (X', Y') des Gitters geneigt ist und der Winkel (α) in der Ebene (Y", Z") orthogonal zur Detektionsebene (X", Y") definiert ist, und das Gitter (4, 8), das ein Gitter (8) ist, das derart berechnet ist, dass das Spektrum, das es erzeugt, um einen Winkel (β) in Bezug zur Detektionsebene (X", Y") des Detektors (7) geneigt ist.

## Claims

1. Inclined-slit spectrograph comprising:
- a light source (1) suitable for emitting a light beam along a direction (2) parallel to an axis (Z),
- an inlet slit (3, 9) suitable for transmitting a part of the light beam emitted by the light source (1) and for generating a transmitted light beam, said inlet slit (3) being of rectangular shape and extending along a longitudinal axis (Y),
- a grating (4, 8) comprising lines arranged one after the other according to an alignment axis (U) and perpendicular to the plane (U, Z) of the spectrograph, said grating (4, 8) being suitable for diffracting the light beam transmitted through the inlet slit (3, 9) and for generating a diffracted light beam and a spectrum in an image plane (X', Y'),
- a detector (7) suitable for detecting the light beam diffracted by the grating (4, 8), said detector (7) comprising a window (6) through which the light beam diffracted by the grating (4, 8) is transmitted, wherein a part of the diffracted light beam generates reflections on the window (6) or between said window and the sensitive surface of the detector (7) contained in a detection plane (X", Y"),
- at least one inclination means for relative inclination of the image plane (X', Y') of a diffracted spectrum with respect to the detection plane (X", Y") of the detector, suitable for avoiding parasitic spectra,
**characterized in that** it comprises:
- a compensation means suitable for compensating for the spectral resolution losses generated by the inclination means, said compensation means comprising the inlet slit (3, 9), which is an inclined inlet slit (9) of rectangular shape arranged between said light source (1) and said grating (4, 8), and a means for rotating the inlet slit relatively to an axis perpendicular to the plane of the slit, said inclined inlet slit (9) being inclined around said axis (Z) in a plane (X, Y) perpendicular to the direction (2) of the light beam emitted by the light source (1), the longitudinal axis (Y) of the inclined inlet slit (9) being inclined by an angle (θ) with respect to the normal (W) to the grating dispersion plane (U, Z), the angle (θ) being greater than 0° and smaller than 90°.

2. Inclined-slit spectrograph according to claim 1, **characterized in that** it comprises a selector filter arranged between the grating (4, 8) and the detector (7).

3. Inclined-slit spectrograph according to claim 1 or 2, **characterized in that** the inclination means suitable for avoiding parasitic spectra comprises the detector (7), which is an inclined detector, said inclined detector being inclined by an angle (α) so that the detection plane (X", Y") of said detector is inclined by an angle (α) with respect to the image plane (X', Y') of the grating, and said angle (α) being defined in the plane (Y", Z"), orthogonal to the detection plane (X", Y").

4. Inclined-slit spectrograph according to claim 3, **characterized in that** the angle (α) of the inclined detector (7) is greater than 0° and smaller than 45°.

5. Inclined-slit spectrograph according to any one of claims 1 to 4, **characterized in that** the inclination means suitable for avoiding parasitic spectra comprises the grating (4, 8), which is a calculated grating (8), determined so that the spectrum it produces is inclined by an angle (β) with respect to the detection plane (X", Y") of the detector (7).

6. Inclined-slit spectrograph according to claim 1, **characterized in that** the inclination means suitable for avoiding parasitic spectra comprises:
- the detector (7), which is an inclined detector, said inclined detector being inclined by an angle (α) so that the detection plane (X", Y") of said detector is inclined by an angle (α) with respect to the image plane (X', Y') of the grating, and said angle (α) being defined in the plane (Y", Z"), orthogonal to the detection plane (X", Y"), and
- the grating (4, 8), which is a calculated grating (8), determined so that the spectrum it produces is inclined by an angle (β) with respect to the detection plane (X", Y") of the detector (7).
